# FASCICULE DE BREVET EUROPEEN

(11) **EP 1 244 048 B1**
(45) Date de publication et mention de la délivrance du brevet: **14.01.2004**
(21) Numéro de dépôt: 01810149.3
(22) Date de dépôt: 14.02.2001
(51) Int. Cl.: G06K 7/00

(54) **Dispositif modulaire de cartes à puces**
Modulares Chipkartensystem
Modular chip card system

(43) Date de publication de la demande: 25.09.2002
(73) Titulaire: Smartdata SA, 1920 Martigny (CH)
(72) Inventeur: Buttet, Jean-Pierre, 1920 Martigny (CH)
(74) Mandataire: Besse, François

(56) Documents cités:
- EP-A- 0 228 278
- EP-A- 0 653 813
- EP-A- 0 831 413
- US-A- 5 591 047

## Description

L'invention concerne un dispositif modulaire comprenant au moins une carte à puce, ladite carte comportant sur l'un de ses bords au moins une terminaison électrique.

Par carte à puce, on désigne un élément de forme essentiellement plane, de dimensions et de composition quelconques, l'élément comprenant au moins un composant électronique destiné à être mis en liaison électrique avec une pièce distincte de la carte. Les cartes utilisées dans le cadre de la présente invention sont dotées de fonctionnalités spécifiques telles que modem, écran, microprocesseur, mémoire RAM, remplissage avec ou sans ressorts, haut-parleur, communication infrarouge ou radio.

Par dispositif modulaire, on désigne un système permettant de changer ou retirer aisément les cartes à puce dans le but de réaliser des dispositifs spécifiques résultants de la combinaison de différentes cartes à puces aux fonctionnalités différentes. La publication EP 1 079 324 A au nom de la demanderesse, faisant partie de l'état de la technique au sens de l'Article 54(3) CBE, divulgue un boîtier contenant un empilement de cartes à puce dont les terminaisons électriques sont situées sur une arête des cartes. La communication entre les cartes ou avec des éléments du boîtier est assurée par un connecteur disposé au fond du boîtier. Ce connecteur peut par exemple être constitué d'une matrice isolante souple en forme de plaque comprenant un ensemble de filaments conducteurs.

La présente invention concerne un dispositif modulaire comprenant un boîtier de forme parallélépipédique possédant une paroi inférieure, une paroi supérieure et un fond dans lequel est logée de manière amovible au moins une carte à puce, ladite carte comportant au moins une terminaison électrique située sur l'un de ses bords et étant destinée à être mise en contact avec au moins un connecteur solidaire du boîtier et distinct de la carte ,
caractérisé par le fait que:
- le connecteur a la forme d'un rail disposé sur le fond du boîtier suivant un axe perpendiculaire au plan d'une des parois inférieure et supérieure,
- chaque terminaison électrique est intégrée dans la carte et se présente sous la forme d'un Y dont les branches s'ouvrent vers ledit bord et entourent partiellement le rail pour assurer un contact électrique entre au moins une partie de la surface intérieure des branches et le rail,
de sorte que la carte peut s'éloigner transversalement du fond du boîtier ou se déplacer le long du rail sans que le contact électrique avec le rail soit perdu.
- chaque terminaison électrique est intégrée dans sa carte respective et se présente sous la forme d'un Y dont les branches s'ouvrent vers l'extérieur de la carte,
- le connecteur a la forme d'un rail orienté perpendiculairement au plan de la ou des cartes,
une partie de la surface intérieure desdites branches est adaptée pour assurer un contact électrique mobile avec ledit rail.

Selon un mode de réalisation particulièrement avantageux de l'invention, le dispositif contient au moins deux cartes superposées. Dans ce cas de figure, le connecteur peut également servir à assurer la communication entre les cartes.

Par rapport aux dispositifs de l'état de la technique, le dispositif selon l'invention offre deux degrés de liberté supplémentaires aux cartes. Le premier degré de liberté est caractérisé par le fait que les cartes peuvent se déplacer transversalement, c'est-à-dire s'éloigner du fond du boîtier, sans que le contact avec le rail conducteur soit perdu. Il n'est donc plus nécessaire d'assurer un contact intime entre les cartes et le fond du boîtier qui contient le connecteur. Par ailleurs, il devient possible de réaliser un dispositif modulaire flexible. Si celui-ci est plié, les cartes sont déplacées transversalement les unes par rapport aux autres sans que la communication inter-cartes soit perdue.

Le deuxième degré de liberté résulte du fait que le dispositif selon l'invention permet également d'utiliser un ensemble de cartes superposées d'épaisseurs différentes et quelconques qui peuvent se déplacer le long des rails. A titre d'exemple, si la hauteur du rail est de 5 mm, on peut initialement avoir un empilement constitué de 5 cartes de 1 mm d'épaisseur, puis le remplacer (en gardant le même boîtier) avec un empilement constitué de 2 cartes de 2 mm d'épaisseur et d'une carte de 1 mm d'épaisseur. Etant donné que la communication entre les cartes s'effectue par le biais du rail conducteur, il est également possible d'insérer dans l'empilement des cartes de remplissage.

De préférence, chaque carte contient plusieurs terminaisons électriques en forme de Y. Dans un tel cas, on utilise plusieurs rails disposés en parallèle et dont le nombre est égal à celui des terminaisons électriques contenues dans une carte.

Un rail se présente avantageusement sous la forme d'une lame dont les faces principales sont adaptées pour entrer en contact avec au moins une partie de la surface intérieure des branches constituant les terminaisons électriques.

Dans un mode préférentiel de réalisation de l'invention, les terminaisons électriques sont de forme plane. Optionnellement, la surface intérieure des branches est munie d'au moins une protubérance afin de localiser le contact électrique entre la terminaison et le rail. Par un effet de frottement des protubérances contre le rail, lors de l'insertion de la carte, la surface de contact est améliorée par élimination des poussières et de la couche superficielle oxydée.

De manière avantageuse, les terminaisons électriques offrent une certaine élasticité. Si l'écartement entre les branches est inférieure à l'épaisseur du rail, lors de l'introduction de ce dernier entre les branches, le contact électrique est d'autant mieux garanti.

Il convient de relever que les caractéristiques des terminaisons électriques décrites précédemment permettent de réaliser un dispositif particulièrement économique.

Des terminaisons électriques de forme plane peuvent être facilement réalisées avec une épaisseur inférieure au millimètre ou même inférieure ou sensiblement de l'ordre du dixième de millimètre. Avec une épaisseur aussi faible, il devient possible d'intégrer les terminaisons électriques dans des structures aussi fines et flexibles que des feuilles de papier. Dans le cas présent, les terminaisons électriques peuvent être placées en sandwich, par exemple par laminage, entre deux couches d'une carte à puce.

Selon un mode particulier de l'invention, le dispositif est constitué de deux empilements adjacents de cartes à puces, chacun des empilements étant connecté aux mêmes rails.

Un exemple de réalisation de l'invention est décrit ci-après au moyen des figures suivantes :
- La figure 1: illustre schématiquement un dispositif dans lequel une première carte est introduite
- La figure 2: montre le dispositif de la figure 1 lorsque la carte est logée dans le boîtier
- La figure 3: montre le dispositif de la figure 1 avec deux cartes logées dans le boîtier
- La figure 4: montre une terminaison électrique avec son rail correspondant
- La figure 5: montre une vue de dessus de l'arrangement de la figure 4
- La figure 6: montre une vue de profil de l'arrangement de la figure 4
- La figure 7: montre une vue de dessus d'une partie de carte
- La figure 8: présente une vue de face de 2 cartes superposées fabriquées par laminage qui peuvent être utilisées avec le dispositif des figures 1 à 3.

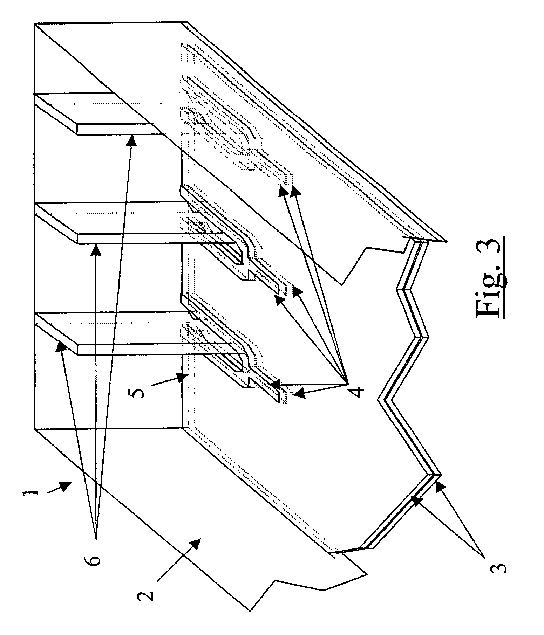

Le dispositif (1) schématisé à la figure 3 comprend un boîtier (2) de forme parallélépipédique dans lequel deux cartes à puce (3) sont superposées. Le boîtier peut contenir une fenêtre sur sa face supérieure et une fenêtre sur sa face inférieure afin de permettre une interaction de l'utilisateur avec les cartes supérieure et inférieure de l'empilement. Les dimensions du boîtier peuvent être quelconques. Par exemple, elles peuvent être définies pour l'utilisation de cartes au format carte de crédit.

Chaque carte (3) contient sur l'un de ses bords (5) une série de terminaisons électriques (4) en forme de Y, les branches du Y s'ouvrant vers l'extérieur de la carte (3) en direction du fond du boîtier (2). Ce dernier est muni d'une série de lames conductrices (6) disposées en parallèle et perpendiculairement par rapport au fond du boîtier (2). Chaque terminaison électrique (4) entoure partiellement une lame (6) de façon à assurer un contact électrique avec celle-ci.

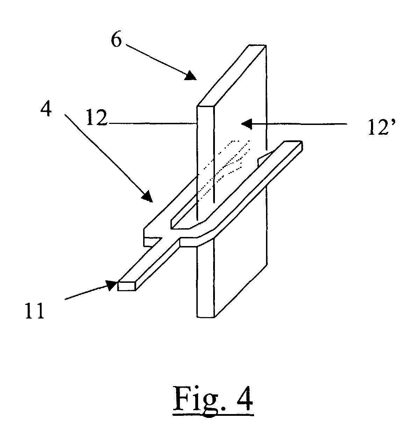

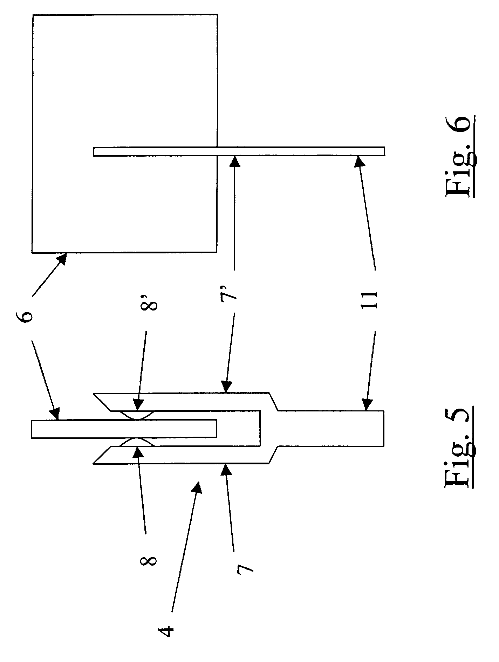

Comme on peut le remarquer en particulier sur les figures 4 et 5, une terminaison électrique (4) a la forme d'un Y dont les deux branches (7,7') sont munies sur leur surface intérieure d'une protubérance (8,8'), ce qui permet de localiser le contact électrique avec la lame (6). Le pied (11) du Y étant lui en contact avec le circuit électrique de la carte (3).

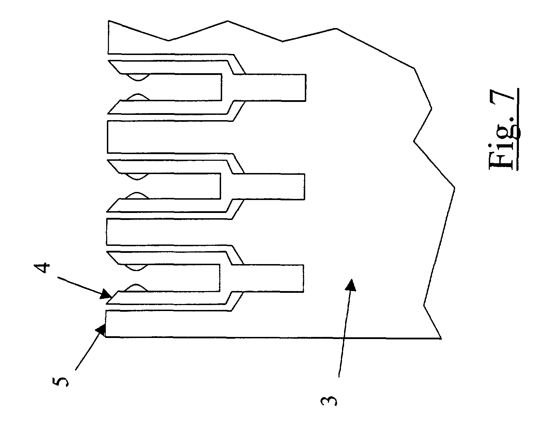

La figure 7 montre une vue schématique des terminaisons électriques disposées sur le bord (5) de la carte (3). Pour des raisons de compréhension, on a visualisé les terminaisons électriques (4) sur cette figure.

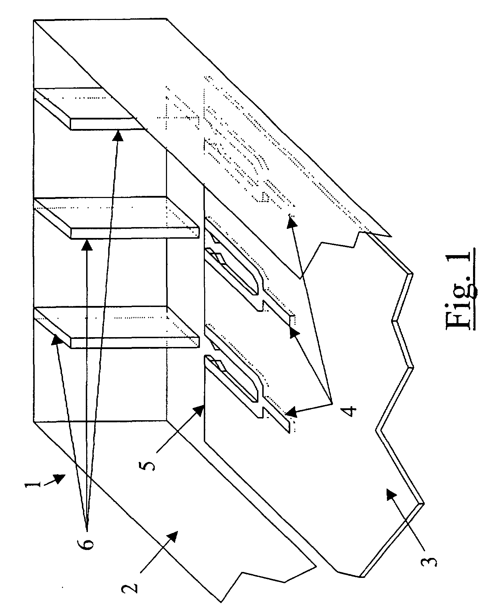

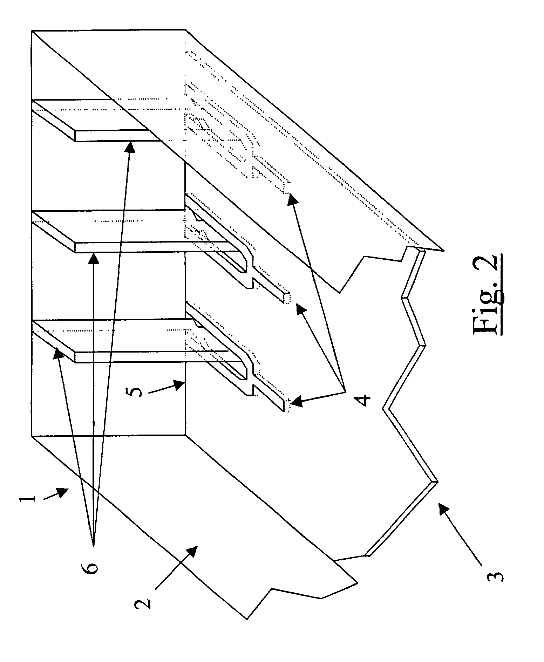

Selon un mode de réalisation (voir figures 1 à 3), les terminaisons électriques (4) sont insérées dans l'épaisseur de la carte.

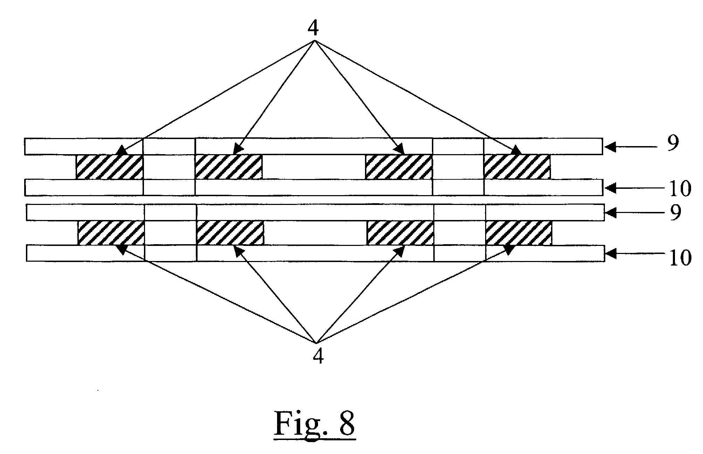

Selon un autre mode de réalisation (voir figure 8), les terminaisons sont prises en sandwich entre deux couches (9,10) de leurs cartes (3) respectives, le montage est ici réalisé par laminage.

Comme on peut le constater sur les figures 1 à 3 principalement, de manière remarquable le contact entre les terminaisons électriques (4) et leur lame (6) respective peut être qualifié de mobile.

En effet, si une carte se déplace légèrement vers le haut ou s'éloigne du fond du boîtier, le contact est toujours établi. Si le boîtier est flexible et qu'il est plié, les cartes ont tendance à se déplacer transversalement les unes par rapport aux autres mais n'empêchent pas le maintien du contact électrique.

Il va de soi que la présente invention ne se limite pas à l'exemple décrit ci-dessus.

La forme et l'éloignement des branches constituant les terminaisons électriques peuvent être très variées. En somme, l'invention englobe tout système terminaison - rail qui résulte en un contact mobile entre les deux pièces de façon à ce que les cartes peuvent se déplacer le long du rail et s'éloigner du fond du boîtier sans que le contact soit perdu comme revendiqué.

## Revendications

1. Dispositif modulaire (1) comprenant un boîtier (2) de forme parallélépipédique possédant une paroi inférieure, une paroi supérieure et un fond dans lequel est logée de manière amovible au moins une carte (3) à puce, ladite carte (3) comportant au moins une terminaison électrique (4) située sur l'un de ses bords (5) et étant destinée à être mise en contact avec au moins un connecteur (6) solidaire du boîtier (2) et distinct de la carte (3),
**caractérisé par le fait que**:
- le connecteur (6) a la forme d'un rail disposé sur le fond du boîtier (3) suivant un axe perpendiculaire au plan d'une des parois inférieure et supérieure,
- chaque terminaison électrique est intégrée dans la carte et se présente sous la forme d'un Y dont les branches s'ouvrent vers ledit bord et entourent partiellement le rail pour assurer un contact électrique entre au moins une partie de la surface intérieure des branches et le rail,
de sorte que la carte (3) peut s'éloigner transversalement du fond du boîtier ou se déplacer le long du rail sans que le contact électrique avec le rail soit perdu.

2. Dispositif selon la revendication 1 **caractérisé par le fait qu'**il comprend au moins deux cartes à puce superposées.

3. Dispositif selon la revendication 1 ou 2 **caractérisé par** une pluralité de rails (6) disposés en parallèle, chaque carte (3) comportant un nombre de terminaisons électriques (4) égal au nombre de rails (6).

4. Dispositif selon l'une quelconque des revendications 1 à 3 **caractérisé par le fait que** chaque rail (6) a sensiblement la forme d'une lame dont les faces principales (12,12') sont adaptées pour contacter une partie (8,8') de la surface intérieure desdites branches (7,7').

5. Dispositif selon l'une quelconque des revendications 1 à 4 **caractérisé par le fait qu'**il comprend une pluralité de cartes (3) d'épaisseurs différentes.

6. Dispositif selon l'une quelconque des revendications 1 à 5 **caractérisé par le fait qu'**il est flexible.

7. Dispositif selon l'une quelconque des revendications 1 à 6 **caractérisé par le fait qu'**il est constitué de deux empilements adjacents de cartes (3) à puce, chacun desdits empilements étant connecté au(x) même(s) rail(s)(6).

8. Carte (3) à puce adaptée à l'utilisation avec le dispositif selon l'une quelconque des revendications 1 à 7, comportant au moins une terminaison électrique (4) située sur l'un de ses bords **caractérisée en ce que** chaque terminaison électrique (4) est intégrée dans la carte (3) et se présente sous la forme d'un Y dont les branches (7,7') s'ouvrent vers ledit bord pour assurer un contact électrique entre au moins une partie de la surface intérieure des branches et un rail destiné à être inséré entre les branches (7,7'), de sorte que la carte peut se déplacer transversalement selon la direction d'insertion ou le long du rail sans que ledit contact soit perdu.

9. Carte (3) à puce selon la revendication 8 **caractérisée en ce que** chaque terminaison électrique est de forme plane.

10. Carte (3) à puce selon la revendication 9 **caractérisée par le fait que** la surface intérieure des branches (7,7') est munie d'au moins une protubérance (8,8').

11. Carte (3) à puce selon la revendication précédente **caractérisée en ce qu'**elle comporte plusieurs terminaisons électriques (4) fabriquées à partir d'une plaque commune.

12. Carte (3) à puce selon l'une des revendications 9 à 11 **caractérisée en ce que** la ou les terminaisons électriques (4) sont prises en sandwich entre deux couches (9,10).

13. Carte (3) à puce selon l'une des revendications 9 à 11 **caractérisée en ce que** la ou les terminaisons électriques (4) sont insérées dans l'épaisseur de la carte.

## Claims

1. Modular device (1) comprising a casing (2) of parallelepipedal shape possessing a lower wall, an upper wall and a bottom in which at least one smart card (3) is removably housed, the said card (3) having at least one electrical termination (4) located on one of its edges (5) and being intended to be brought into contact with at least one connector (6) attached to the casing (2) and separate from the card (3),
**characterized in that**:
- the connector (6) has the shape of a rail placed on the bottom of the casing (3) along an axis perpendicular to the plane of one of the lower and upper walls;
- each electrical termination is incorporated into the card and is in the form of a Y, the branches of which open towards the said edge and partly surround the rail in order to ensure electrical contact between at least one portion of the inner surface of the branches and the rail;
so that the card (3) can be moved away transversely from the bottom of the casing or be moved along the rail without electrical contact with the rail being lost.

2. Device according to Claim 1, **characterized in that** it comprises at least two superposed smart cards.

3. Device according to Claim 1 or 2, **characterized by** a plurality of rails (6) arranged in parallel, each card (3) having a number of electrical terminations (4) equal to the number of rails (6).

4. Device according to any one of Claims 1 to 3, **characterized in that** each rail (6) has approximately the shape of a plate, the main faces (12, 12') of which are suitable for contacting a portion (8, 8') of the inner surface of the said branches (7, 7').

5. Device according to any one of Claims 1 to 4, **characterized in that** it comprises a plurality of cards (3) having different thicknesses.

6. Device according to any one of Claims 1 to 5, **characterized in that** it is flexible.

7. Device according to any one of Claims 1 to 6, **characterized in that** it consists of two adjacent stacks of smart cards (3), each of the said stacks being connected to the same rail(s) (6).

8. Smart card (3) suitable for use with the device according to any one of Claims 1 to 7, comprising at least one electrical termination (4) located on one of its edges, **characterized in that** each electrical termination (4) is incorporated into the card (3) and is in the form of a Y, the branches (7, 7') of which open towards the said edge in order to ensure electrical contact between at least one portion of the inner surface of the branches and a rail intended to be inserted between the branches (7, 7'), so that the card can be moved transversely along the direction of insertion or along the rail without said contact being lost.

9. Smart card (3) according to Claim 8, **characterized in that** each electrical termination is of plane shape.

10. Smart card (3) according to Claim 9, **characterized in that** the inner surface of the branches (7, 7') is provided with at least one protuberance (8, 8').

11. Smart card (3) according to the preceding claim, **characterized in that** it has several electrical terminations (4) manufactured from a common sheet.

12. Smart card (3) according to one of Claims 9 to 11, **characterized in that** the electrical termination(s) (4) are sandwiched between two layers (9, 10).

13. Smart card (3) according to one of Claims 9 to 11, **characterized in that** the electrical termination(s) (4) are inserted in the thickness of the card.

## Patentansprüche

1. Modulvorrichtung (1) mit einem parallelepipedisch ausgebildeten Gehäuse (2), das eine untere Wand, eine obere Wand und einen Boden aufweist, in dem mindestens eine Chipkarte (3) beweglich untergebracht ist, wobei die Karte (3) mindestens einen elektrischen Anschluß (4) aufweist, der sich an einem ihrer Ränder (5) befindet und mit mindestens einem fest mit dem Gehäuse (2) verbundenen und von der Karte (3) verschiedenen Verbinder (6) kontaktiert werden soll,
**dadurch gekennzeichnet, daß**
- der Verbinder (6) als eine am Boden des Gehäuses (3) entlang einer senkrecht zur Ebene der unteren oder der oberen Wand verlaufenden Achse angeordnete Schiene ausgebildet ist,
- jeder elektrische Anschluß in der Karte integriert und in Form eines Y ausgebildet ist, dessen Schenkel sich zum Rand hin öffnen und die Schiene teilweise umgeben, um einen elektrischen Kontakt zwischen mindestens einem Teil der Innenfläche der Schenkel und der Schiene zu gewährleisten,
so daß die Karte (3) sich in Querrichtung vom Boden des Gehäuses entfernen oder sich entlang der Schiene verschieben kann, ohne daß der elektrische Kontakt mit der Schiene verlorengeht.

2. Vorrichtung nach Anspruch 1, **dadurch gekennzeichnet, daß** sie mindestens zwei übereinander gelagerte Chipkarten umfaßt.

3. Vorrichtung nach Anspruch 1 oder 2, **gekennzeichnet durch** mehrere parallel angeordnete Schienen (6), wobei jede Karte (3) mehrere elektrische Anschlüsse (4) umfaßt, deren Anzahl gleich der Anzahl der Schienen (6) ist.

4. Vorrichtung nach einem der Ansprüche 1 bis 3, **dadurch gekennzeichnet, daß** jede Schiene (6) im wesentlichen die Form eines Blattes aufweist, dessen Hauptflächen (12, 12') zur Kontaktierung eines Teils (8, 8') der Innenfläche der Schenkel (7, 7') ausgeführt sind.

5. Vorrichtung nach einem der Ansprüche 1 bis 4, **dadurch gekennzeichnet, daß** sie mehrere Karten (3) mit unterschiedlicher Dicke enthält.

6. Vorrichtung nach einem der Ansprüche 1 bis 5, **dadurch gekennzeichnet, daß** sie flexibel ist.

7. Vorrichtung nach einem der Ansprüche 1 bis 6, **dadurch gekennzeichnet, daß** sie aus zwei benachbarten Chipkartenstapeln (3) besteht, die jeweils mit der (den) gleichen Schiene(n) (6) verbunden sind.

8. Chipkarte (3) zur Verwendung mit der Vorrichtung nach einem der Ansprüche 1 bis 7, die mindestens einen elektrischen Anschluß (4) aufweist, der sich an einem ihrer Ränder befindet, **dadurch gekennzeichnet, daß** jeder elektrische Anschluß (4) in der Karte (3) integriert und in Form eines Y ausgebildet ist, dessen Schenkel (7, 7') sich zum Rand hin öffnen, um einen elektrischen Kontakt zwischen mindestens einem Teil der Innenfläche der Schenkel und einer Schiene zu gewährleisten, die zwischen die Schenkel (7, 7') eingeführt werden soll, so daß die Karte sich in Querrichtung entlang der Einführrichtung oder entlang der Schiene verschieben kann, ohne daß der Kontakt verlorengeht.

9. Chipkarte (3) nach Anspruch 8, **dadurch gekennzeichnet, daß** jeder elektrische Anschluß ebener Form ist.

10. Chipkarte (3) nach Anspruch 9, **dadurch gekennzeichnet, daß** die Innenfläche der Schenkel (7, 7') mit mindestens einem Vorsprung (8, 8') versehen ist.

11. Chipkarte (3) nach dem vorhergehenden Anspruch, **dadurch gekennzeichnet, daß** sie mehrere elektrische Anschlüsse (4) enthält, die aus einer gemeinsamen Platte gefertigt werden.

12. Chipkarte (3) nach einem der Ansprüche 9 bis 11, **dadurch gekennzeichnet, daß** der oder die elektrischen Anschlüsse (4) in Sandwichbauweise zwischen zwei Schichten (9, 10) angeordnet sind.

13. Chipkarte (3) nach einem der Ansprüche 9 bis 11, **dadurch gekennzeichnet, daß** der oder die elektrischen Anschlüsse (4) in die Dicke der Karte eingeführt werden.
